(19) Europäisches Patentamt
European Patent Office
Office européen des brevets

(11) **EP 3 624 453 A1**

(12) **EUROPEAN PATENT APPLICATION**
published in accordance with Art. 153(4) EPC

(43) Date of publication:
**18.03.2020 Bulletin 2020/12**

(51) Int Cl.:
***H04N 19/40*** (2014.01)

(21) Application number: **18915782.9**

(22) Date of filing: **26.09.2018**

(86) International application number:
**PCT/CN2018/107476**

(87) International publication number:
**WO 2020/010709 (16.01.2020 Gazette 2020/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.07.2018 CN 201810770745**

(71) Applicant: **Wangsu Science & Technology Co., Ltd.**
**Xuhui District Shanghai 200030 (CN)**

(72) Inventors:
• **ZHENG, Huijie**
 **Shanghai 200030 (CN)**
• **LIU, Zhuqing**
 **Shanghai 200030 (CN)**
• **LI, Junming**
 **Shanghai 200030 (CN)**

(74) Representative: **Hanna Moore + Curley**
**Garryard House**
**25/26 Earlsfort Terrace**
**Dublin 2, D02 PX51 (IE)**

(54) **A TRANSCODING TASK ALLOCATION METHOD, SCHEDULING DEVICE AND TRANSCODING DEVICE**

(57) A method for assigning a transcoding task includes: after receiving a task assignment request sent by a client device, the scheduling device may determine the current load value of each transcoding device according to the target resolutions of the transcoding tasks carried in each transcoding device and the device performance of each transcoding device, and further determine a target transcoding device whose current load value is less than a first threshold, to allow the client device to send a transcoding task to the target transcoding device.

FIG. 2

**Description**

FIELD OF DISCLOSURE

The present disclosure generally relates to the field of data processing and, more particularly, relates to a method for assigning a transcoding task, and a scheduling device and a transcoding device thereof.

BACKGROUND

In video websites, video transcoding is an important part of the video generation process. Video websites convert rich video resources into a format suitable for network playback, so that users may access respective video websites to watch various videos through computer terminals, mobile terminals, or TV terminals with network access functions. Since different video resources may have different video formats, in order to adapt to the scenarios of different network bandwidths, videos need to be presented to users in different resolutions. Accordingly, video websites need to create certain transcoding tasks and execute the corresponding transcoding tasks to conduct a video transcoding process through their internal transcoding systems.

In the existing transcoding systems, after receiving a transcoding task sent by a client device, the scheduling device usually selects an appropriate transcoding device according to an Internet Protocol (IP) connected bewteen the network of the client devices, so as to implement a transcoding task between the client device and the selected transcoding device. However, a transcoding device selected in this way may have an overload condition, which then leads the transcoding device to be unable to implement in time the transcoding task sent by the client device.

In light of the above, there is a need for a method for assigning transcoding tasks, which may be used to solve the problem in the existing technologies that an assigned transcoding device is unable to perform a transcoding task in time due to overload or the like.

BRIEF SUMMARY OF THE DISCLOSURE

The embodiments of the present disclosure provide a method for assigning a transcoding task, a scheduling device and a transcoding device thereof, which solve the technical problem in the existing technologies that an assigned transcoding device is unable to perform a transcoding task in time due to overload or the like.

The embodiments of the present disclosure provide a method for assigning a transcoding task. The method includes:

after receiving a task assignment request sent by a client device, acquiring, by a scheduling device, load information of a plurality of transcoding devices, where load information of each transcoding device includes target requirement information of transcoding tasks carried by the transcoding device, and the target requirement information of a transcoding task includes a target resolution of the transcoding task and a target frame rate of the transcoding task;
for a first transcoding device, determining, by the scheduling device, a current load value of the first transcoding device according to target requirement information of at least one transcoding task in the first transcoding device and device performance of the first transcoding device, where the first transcoding device is any one of the plurality of transcoding devices;
determining, by the scheduling device, from the plurality of transcoding devices, a target transcoding device whose current load value is less than a first threshold according to current load values of the plurality of transcoding devices, and returning, by the scheduling device, a response message for the task assignment request to the client device, where the response message is used to instruct the client device to send a transcoding task to the target transcoding device.

In this way, the scheduling device may calculate the load value of each transcoding device according to the load information of each transcoding device, so that a transcoding device with a smaller load value may be selected as the target transcoding device. Compared with the existing technologies that directly selects the target transcoding device according to the IP address of a transcoding device, the embodiments of the present disclosure take full consideration of the load status of a transcoding device, which effectively avoids the situation in which a transcoding task is unable to be performed in time due to the overload of the transcoding device, thereby improving the efficiency of video transcoding.

In one possible implementation, determining, by the scheduling device, the current load value of the first transcoding device according to the target requirement information of at least one transcoding task in the first transcoding device and the device performance of the first transcoding device includes:

determining, by the scheduling device, a preset maximum number of tasks corresponding to each piece of target requirement information of each transcoding task carried by the first transcoding device according to the device performance of the first transcoding device; and

determining, by the scheduling device, the current load value of the first transcoding device according to the preset maximum number of tasks corresponding to each piece of target requirement information in the first transcoding device and the number of transcoding tasks corresponding to each piece of target requirement information in the first transcoding device.

In this way, the scheduling device may obtain the current load value of the first transcoding device according to the number of tasks and the preset maximum number of tasks of each piece of target requirement information in the first transcoding device. This approach allows a more reasonable calculation of the current load value of the transcoding device, thereby improving the rationality of determining the transcoding device.

In one possible implementation, the current load value is determined by:

$$A = f_1 \times \frac{1}{X_1} + f_2 \times \frac{1}{X_2} + \cdots + f_n \times \frac{1}{X_n}$$

where A is the current load value of the first transcoding device, $f_i$ is the number of tasks corresponding to the i-th target requirement information in the first transcoding device, $X_i$ is the preset maximum number of tasks corresponding to the i-th target requirement information in the first transcoding device, i = 1, 2, ... , n, n is the number of target requirement information of transcoding tasks carried by the first transcoding device, and n is an integer greater than or equal to 1.

In one possible implementation, the load information of each transcoding device further includes usages of a plurality of execution cores in each transcoding device; and

determining, by the scheduling device, from the plurality of transcoding devices, a target transcoding device whose current load value is less than a first threshold according to current load values of the plurality of transcoding devices includes:

determining, by the scheduling device, from the plurality of transcoding devices, a target transcoding device whose current load value is less than the first threshold and average CPU usage is less than a second threshold according to the current load values of the plurality of transcoding devices and average CPU usages of the plurality of transcoding devices, where an average CPU usage of a transcoding device is determined according to usages of a plurality of execution cores in the transcoding device.

In this way, when determining the target transcoding device, both the current load value and the average CPU usage of each transcoding device are considered, so that the transcoding device may be selected from different angles, thereby improving the rationality of determining the transcoding device.

In one possible implementation, determining an average CPU usage of the first transcoding device according to usages of a plurality of execution cores in the first transcoding device includes:

ranking, by the scheduling device, the plurality of execution cores in the first transcoding device according to a usage of each execution core in a desending order; and

determining, by the scheduling device, an average value of usages of top N execution cores as an average CPU usage of the first transcoding device, where N is an integer greater than or equal to 1.

In this way, the problem of too much calculation when there are too many execution cores in the transcoding device may be avoided, thereby reducing the amount of calculation for the average CPU usage, and further reducing the operation load on the scheduling device.

In one possible implementation, determining, from the plurality of transcoding devices, a target transcoding device whose current load value is less than the first threshold and average CPU usage is less than the second threshold includes:

determining, by the scheduling device, from the plurality of transcoding devices, at least one candidate transcoding device whose current load value is less than the first threshold;

determining, by the scheduling device, an average CPU usage of each candidate transcoding device according to usages of a plurality of execution cores in each candidate transcoding device; and

determining, by the scheduling device, from the at least one candidate transcoding device, a target transcoding device whose average CPU usage is less than the second threshold.

In one possible implementation, the task assignment request includes target requirement information of a to-be-assigned task, and the target requirement information of the to-be-assigned task includes a target resolution of the to-be-assigned task and a target frame rate of the to-be-assigned task; and

determining, by the scheduling device, from the plurality of transcoding devices, a target transcoding device whose current load value is less than the first threshold according to the current load values of the plurality of transcoding devices includes:

determining, by the scheduling device, from the plurality of transcoding devices, a target transcoding device whose current load value is less than the first threshold and predicted load value is less than a third threshold according to the current load values of the plurality of transcoding devices and predicted load values of the plurality of transcoding devices, where a predicted load value of a transcoding device is determined according to a current load value of the transcoding device and a load value of the to-be-assigned transcoding task, and the load value of the to-be-assigned task is determined according to the target requirement information of the to-be-assigned transcoding task.

In this way, when determining the target transcoding device, both the current load value of each transcoding device and the predicted load value of each transcoding device are considered, so that the transcoding device may be selected from different angles, thereby improving the rationality of determining the transcoding device.

In one possible implementation, the task assignment request includes the target requirement information of the to-be-assigned task and an identifier of the to-be-assigned task, and the target requirement information of the to-be-assigned task includes the target resolution of the to-be-assigned task and the target frame rate of the to-be-assigned task, and the load information of each transcoding device further includes identifiers of transcoding tasks carried by the transcoding device; and

after obtaining, by the scheduling device, the load information of the plurality of transcoding devices and before determining, by the scheduling device, the current load value of the first transcoding device, the method further includes: determining, by the scheduling device, that there exists no transcoding task, among transcoding tasks carried by the plurality of transcoding devices, that is consistent with the target resolution of the to-be-assigned task, the target frame rate of the to-be-assigned task, and the identifier of the to-be-assigned task.

In this way, the scheduling device may first determine whether there already exists a transcoding task, in the plurality of transcoding devices, that is consistent with the to-be-assigned task, thereby avoiding a problem of repeatedly creating a transcoding task if the to-be-assigned task already exists, which results in a waste of resources.

The embodiments of the present disclosure provide a method for assigning a transcoding task. The method includes:

after receiving a status request sent by a scheduling device, determining, by a transcoding device, current load value according to load information of the transcoding device and device performance of the transcoding device, where the load information includes target requirement information of at least one transcoding task carried by the transcoding device, and target requirement information of a transcoding task includes a target resolution of the transcoding task and a target frame rate of the transcoding task;

generating, by the transcoding device, a response message for the status request according to the current load value; transmitting, by the transcoding device, the response message to the scheduling device, to allow the scheduling device to determine a target transcoding device according to the response message, where the target transcoding device is configured to perform a to-be-assigned transcoding task.

In this way, the transcoding device may calculate the current load value itself according to the load information of the device, which may reduce the amount of calculation on the scheduling device, thereby reducing the operation load on the scheduling device. Next, the scheduling device may select a transcoding device with a smaller current load value as the target transcoding device. Compared with the existing technologies that directly selects the target transcoding device according to the IP address of a transcoding device, the embodiments of the present disclosure take full consideration of the load status of a transcoding device, thereby effectively avoiding a situation in which a transcoding task is unable to be executed in time due to the overload of the transcoding device, which improves the efficiency of video transcoding.

In one possible implementation, determining, by the transcoding device, the current load value according to the load information and the device performance of the transcoding device includes:

determining, by the transcoding device, a preset maximum number of tasks corresponding to each piece of target requirement information of each carried transcoding task according to the device performance; and determining, by the transcoding device, the current load value of the transcoding device according to the preset maximum number of tasks corresponding to each piece of target requirement information and the number of transcoding tasks corresponding to each piece of target requirement information.

In this way, the transcoding device may obtain the current load value according to the number of tasks and the preset maximum number of tasks of each target requirement information in the transcoding device. This approach may calculate the current load value of the transcoding device more reasonably, thereby improving the rationality of determining the target transcoding device.

The method according to claim 10, where the current load value is determined by:

$$A = f_1 \times \frac{1}{X_1} + f_2 \times \frac{1}{X_2} + \cdots + f_n \times \frac{1}{X_n}$$

where A is the current load value of the transcoding device, $f_i$ is the number of tasks corresponding to the i-th target requirement information in the transcoding device, $X_i$ is the preset maximum number of tasks corresponding to the i-th target requirement information in the transcoding device, $i = 1, 2, ... , n$, n is the number of target requirement information of transcoding tasks carried by the transcoding device, and n is an integer greater than or equal to 1.

In one possible implementation, the load information further includes usages of a plurality of execution cores; and the method further includes:

determining, by the transcoding device, an average CPU usage according to the usages of the plurality of execution cores; and
generating, by the transcoding device, the response message for the status request according to the current load value includes:
generating, by the transcoding device, the response message for the status request according to the current load value and the determined average CPU usage.

In one possible implementation, determining, by the transcoding device, the average CPU usage according to the usages of the plurality of execution cores includes:

ranking, by the transcoding device, the plurality of execution cores according to a usage of each execution core in a desending order; and
determining, by the transcoding device, an average value of usages of top N execution cores as the average CPU usage, where N is an integer greater than or equal to 1.

In this way, the problem of too much calculation when there are too many execution cores in the transcoding device may be avoided, thereby reducing the amount of calculation of the average CPU usage, and further reducing the operation load in the transcoding device.

In one possible implementation, the status request includes target requirement information of a to-be-assigned task, and the target requirement information of the to-be-assigned task includes a target resolution and a target frame rate of the to-be-assigned task; and
the method further includes:

determining, by the transcoding device, a load value of the to-be-assigned task according to the target requirement information of the to-be-assigned task;
determining, by the transcoding device, a predicted load value of the transcoding device according to the current load value of the transcoding device and the load value of the to-be-assigned task; and
generating, by the transcoding device, the response message for the status request according to the current load value includes:
generating, by the transcoding device, the response message for the status request according to the current load value and the predicted load value of the transcoding device.

In one possible implementation, the status request includes the target requirement information of the to-be-assigned task and an identifier of the to-be-assigned task, and the target requirement information of the to-be-assigned task includes the target resolution of the to-be-assigned task and the target frame rate of the to-be-assigned task; and
after receiving, by the transcoding device, the status request sent by the scheduling device and before determining, by the transcoding device, the current load value, the method further includes:
determining, by the transcoding device, that there exists no transcoding task, in transcoding tasks carried by the transcoding device, that is consistent with the target resolution of the to-be-assigned task, the target frame rate of the to-be-assigned task, and the identifier of the to-be-assigned task.

In this way, the transcoding device may first determine whether there is a transcoding task that is consistent with the to-be-assigned task, thereby avoiding repeatedly creating the transcoding task if the to-be-assigned task already exists, which results in waste of resources.

The embodiments of the present disclosure provide a scheduling device. The scheduling device includes:

a receiving unit that is configured to acquire load information of a plurality of transcoding devices after receiving a task assignment request sent by a client device, where load information of each transcoding device includes target requirement information of transcoding tasks carried by the transcoding device, and target requirement information of a transcoding task includes a target resolution of the transcoding task and a target frame rate of the transcoding task; a processing unit that is configured to, for a first transcoding device, determine a current load value of the first transcoding device according to target requirement information of at least one transcoding task in the first transcoding device and device performance of the first transcoding device, the first transcoding device being any one of the plurality of transcoding devices, and determine, from the plurality of transcoding devices, a target transcoding device whose current load value is less than a first threshold according to current load values of the plurality of transcoding devices; and a transmitting unit that is configured to return a response message for the task assignment request to the client device, where the response message is used to instruct the client device to send a transcoding task to the target transcoding device.

In one possible implementation, the processing unit is specifically configured to:

determine, according to the device performance of the first transcoding device, a preset maximum number of tasks corresponding to each piece of target requirement information of each transcoding task carried by the first transcoding device; and determine the current load value of the first transcoding device according to a preset maximum number of tasks corresponding to each piece of target requirement information in the first transcoding device and the number of transcoding tasks corresponding to each piece of target requirement information in the first transcoding device.

In one possible implementation, the current load value is determined by:

$$A = f_1 \times \frac{1}{X_1} + f_2 \times \frac{1}{X_2} + \cdots + f_n \times \frac{1}{X_n}$$

where A is the current load value of the first transcoding device, $f_i$ is the number of tasks corresponding to the i-th target requirement information in the first transcoding device, $X_i$ is the preset maximum number of tasks corresponding to the i-th target requirement information in the first transcoding device, i = 1, 2, ... , n, n is the number of target requirement information of transcoding tasks carried by the first transcoding device, and n is an integer greater than or equal to 1.
In one possible implementation, the load information of each transcoding device further includes usages of a plurality of execution cores in each transcoding device; and
the processing unit is specifically configured to:
determine, from the plurality of transcoding devices, a target transcoding device whose current load value is less than the first threshold and average CPU usage is less than a second threshold according to the current load values of the plurality of transcoding devices and average CPU usages of the plurality of transcoding devices, where an average CPU usage of a transcoding device is determined according to usages of a plurality of execution cores in the transcoding device.
In one possible implementation, the processing unit is specifically configured to:

rank a plurality of execution cores in the first transcoding device according to a usage of each execution core in a desending order; and determine an average value of usages of top N execution cores as an average CPU usage of the first transcoding device, where N is an integer greater than or equal to 1.

In one possible implementation, the processing unit is specifically configured to:

determine, from the plurality of transcoding devices, at least one candidate transcoding device whose current load value is less than the first threshold; determine an average CPU usage of each candidate transcoding device according to usages of a plurality of execution cores in each candidate transcoding device; and determine, from the at least one candidate transcoding device, a target transcoding device whose average CPU usage is less than the second threshold.

In one possible implementation, the task assignment request includes target requirement information of a to-be-assigned task, and the target requirement information of the to-be-assigned task includes a target resolution of the to-be-assigned task and a target frame rate of the to-be-assigned task; and
the processing unit is specifically configured to:
determine, from the plurality of transcoding devices, a target transcoding device whose current load value is less than the first threshold and predicted load value is less than a third threshold according to the current load values of the plurality of transcoding devices and predicted load values of the plurality of transcoding devices, where a predicted load value of a transcoding device is determined according to a current load value of the transcoding device and a load value of the to-be-assigned transcoding task, and the load value of the to-be-assigned task is determined according to the target requirement information of the to-be-assigned transcoding task.

In one possible implementation, the task assignment request includes the target requirement information of the to-be-assigned task and an identifier of the to-be-assigned task, and the target requirement information of the to-be-assigned task includes the target resolution of the to-be-assigned task and the target frame rate of the to-be-assigned task, and the load information of each transcoding device further includes identifiers of transcoding tasks carried by the transcoding device; and
before determining the current load value of the first transcoding device, the processing unit is further configured to:
determine, among transcoding tasks carried by the plurality of transcoding devices, that there exists no transcoding task that is consistent with the target resolution of the to-be-assigned task, the target frame rate of the to-be-assigned task, and the identifier of the to-be-assigned task.

The embodiments of the present disclosure provide a transcoding device. The transcoding device includes:

a receiving unit that is configured to receive a status request sent by a scheduling device;
a processing unit that is configured to determine a current load value according to load information of the transcoding device and device performance of the transcoding device, where the load information includes target requirement information of at least one transcoding task carried by the transcoding device, and target requirement information of a transcoding task includes a target resolution of the transcoding task and a target frame rate of the transcoding task, and generate a response message for the status request according to the current load value;
a transmitting unit that is configured to transmit the response message to the scheduling device, to allow the scheduling device to determine a target transcoding device according to the response message, where the target transcoding device is configured to perform a to-be-assigned transcoding task.

In one possible implementation, the processing unit is specifically configured to:

determine a preset maximum number of tasks corresponding to each piece of target requirement information of each carried transcoding task according to the device performance; and
determine the current load value of the transcoding device according to the preset maximum number of tasks corresponding to each piece of target requirement information and the number of transcoding tasks corresponding to each piece of target requirement information.

In one possible implementation, the current load value is determined by:

$$A = f_1 \times \frac{1}{X_1} + f_2 \times \frac{1}{X_2} + \cdots + f_n \times \frac{1}{X_n}$$

where A is the current load value of the transcoding device, $f_i$ is the number of tasks corresponding to the i-th target requirement information in the transcoding device, $X_i$ is the preset maximum number of tasks corresponding to the i-th target requirement information in the transcoding device, i = 1, 2, ... , n, n is the number of target requirement information of transcoding tasks carried by the transcoding device, and n is an integer greater than or equal to 1.

In one possible implementation, the load information further includes usages of a plurality of execution cores; and
the processing unit is further configured to:

determine an average CPU usage according to the usages of the plurality of execution cores; and
generate the response message for the status request according to the current load value and the determined average CPU usage.

In one possible implementation, the processing unit is specifically configured to:

rank the plurality of execution cores according to a usage of each execution core in a desending order; and determine an average value of usages of top N execution cores as the average CPU usage, where N is an integer greater than or equal to 1.

In one possible implementation, the status request includes target requirement information of a to-be-assigned task, and the target requirement information of the to-be-assigned task includes a target resolution and a target frame rate of the to-be-assigned task; and

the processing unit is further configured to:

determine a load value of the to-be-assigned task according to the target requirement information of the to-be-assigned task;

determine a predicted load value of the transcoding device according to the current load value of the transcoding device and the load value of the to-be-assigned task; and

generate the response message for the status request according to the current load value and the predicted load value of the transcoding device.

In one possible implementation, the status request includes the target requirement information of the to-be-assigned task and an identifier of the to-be-assigned task, and the target requirement information of the to-be-assigned task includes the target resolution of the to-be-assigned task and the target frame rate of the to-be-assigned task; and

before determining the current load value, the processing unit is further configured to:

determine, among transcoding tasks carried by the transcoding device, that there exists no transcoding task that is consistent with the target resolution of the to-be-assigned task, the target frame rate of the to-be-assigned task, and the identifier of the to-be-assigned task.

## BRIEF DESCRIPTION OF THE DRAWINGS

To make the technical solutions in the embodiments of the present disclosure clearer, a brief introduction of the accompanying drawings consistent with descriptions of the embodiments will be provided hereinafter.

FIG. 1 is a schematic diagram of a system architecture according to some embodiments of the present disclosure;

FIG. 2 is a flowchart of a method for assigning a transcoding task according to some embodiments of the present disclosure;

FIG. 3 is a flowchart of another method for assigning a transcoding task according to some embodiments of the present disclosure;

FIG. 4 is a schematic structural diagram of a scheduling device according to some embodiments of the present disclosure; and

FIG. 5 is a schematic structural diagram of a transcoding device according to some embodiments of the present disclosure.

## DETAILED DESCRIPTION

The present disclosure will be made in details hereinafter with reference to the accompanying drawings of the specification. The specific operations in the method-related embodiments may also be applicable to the device-related embodiments.

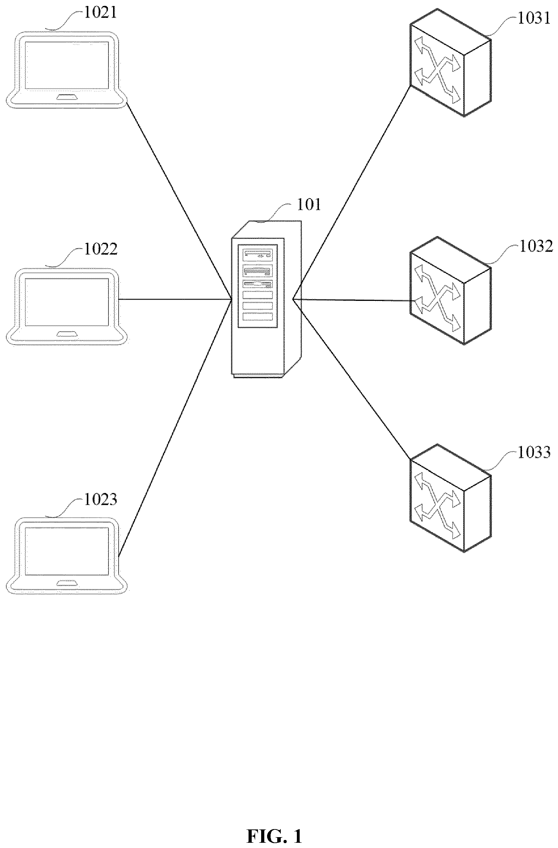

FIG. 1 exemplarily shows a schematic diagram of a system architecture according to some embodiments of the present disclosure. As shown in FIG. 1, the system architecture 100, consistent with the embodiments of the present disclosure, includes a scheduling device 101, at least one client device, such as the client device 1021, the client device 1022, and the client device 1023 shown in FIG. 1, as well as a plurality of transcoding devices, such as the transcoding device 1031, the transcoding device 1032, and the transcoding device 1033 shown in FIG. 1.

In the embodiments of the present disclosure, the client devices may include a variety of devices, such as a notebook, a smartphone, a tablet, and a smart TV, etc.

Embodiment 1:

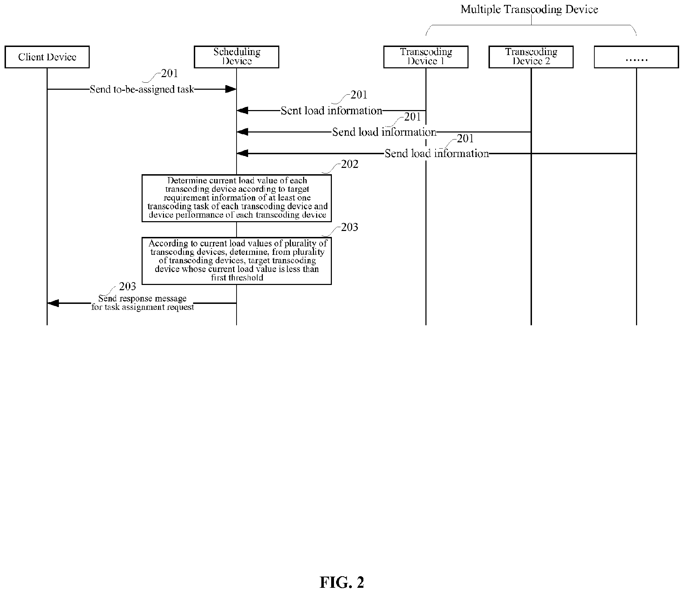

Based on the system architecture shown in FIG. 1, FIG. 2 exemplarily shows a flowchart corresponding to a method for assigning a transcoding task according to some embodiments of the present disclosure. The method includes the following steps:

Step 201: After receiving a task assignment request sent by a client device, the scheduling device acquires load information of a plurality of transcoding devices.

Step 202: For a first transcoding device, the scheduling device determines current load value of the first transcoding device according to target requirement information of at least one transcoding task in the first transcoding device and device performance of the first transcoding device.

Step 203: The scheduling device determines, from the plurality of transcoding devices, a target transcoding device whose current load value is less than a first threshold according to current load values of the plurality of transcoding devices, and returns a response message for the task assignment request to the client device, where the response message is used to instruct the client device to send a transcoding task to the target transcoding device.

In the embodiments of the present disclosure, the scheduling device may calculate the current load value of each transcoding device according to the load information of each transcoding device, so that a transcoding device with a smaller current load value may be selected as the target transcoding device. Compared with the existing technologies that directly selects the target transcoding device according to the IP address of a transcoding device, the embodiments of the present disclosure take full consideration of the load status of a transcoding device, which effectively avoids a condition in which a transcoding task is unable to be executed in time due to the overload of a transcoding device, thereby improving the efficiency of video transcoding.

Before performing Step 201, any of the client devices shown in FIG. 1 may send a task assignment request to the scheduling device. For example, the client device 1021 sends a task assignment request to the scheduling device 101. The task assignment request may be used to request the scheduling device to assign a proper transcoding device to the client device.

Taking a scenario of video live streaming as an example, after a video anchor records a video, the recorded video may be uploaded to a live streaming platform. Since the live streaming platform serves many users, different users may have different requirements for the resolution of the video. This requires the live streaming platform to transcode the video by using a transcoding device, to meet the users' requirements for different resolutions. In the embodiments of the present disclosure, the device associated with the live streaming platform may be considered as a client device. After receiving the video file uploaded by the video anchor, the live streaming platform may send a task assignment request to the scheduling device, to acquire a proper transcoding device to transcode the video file.

In Step 201, after receiving the task assignment request, the scheduling device may acquire load information of a transcoding device connected to the scheduling device. In the embodiments of the present disclosure, there are multiple ways to obtain the load information of a transcoding device. In one possible implementation, the scheduling device acquires load information of all transcoding devices. For example, if there are 10 transcoding devices connected to the scheduling device, the scheduling device may acquire load information of each of the 10 transcoding devices.

In another possible implementation, the scheduling device acquires load information of a specific transcoding device. For example, after receiving a task assignment request, according to the location information of the client device included in the task assignment request, the scheduling device may determine, from all the transcoding devices connected to the scheduling device, a transcoding device(s) associated with the location information of the client device. The scheduling device then acquires load information of the transcoding device(s) corresponding to the location information of the client device. For example, Table 1 shows an example of obtaining a specific transcoding device(s). There are 10 transcoding devices connected to the scheduling device, and the location information associated with each transcoding device is as shown in Table 1, which will not be discussed one by one here. If the location information of the client device is in Minhang District, Shanghai, according to the information shown in Table 1, the transcoding device(s) with the location information in Shanghai, i.e., the transcoding device 3, the transcoding device 6, and the transcoding device 9, may be selected from the 10 transcoding devices. Next, the scheduling device may acquire the load information of the transcoding device 3, the load information of the transcoding device 6, and the load information of the transcoding device 9.

Table 1: An example of obtaining a specific transcoding device

| Device Number | Location Information of Transcoding Device | Device Number | Location Information of Trans coding Device |
|---|---|---|---|
| Transcoding Device 1 | Haidian District, Beijing | Transcoding Device 6 | Putuo District, Shanghai |
| Transcoding Device 2 | Xiaoshan District, Hangzhou | Transcoding Device 7 | Pukou District, Nanjing |
| Transcoding Device 3 | Jing'an District, Shanghai | Transcoding Device 8 | Panyu District, Guangzhou |

(continued)

| Device Number | Location Information of Transcoding Device | Device Number | Location Information of Trans coding Device |
|---|---|---|---|
| Transcoding Device 4 | Chaoyang District, Beijing | Transcoding Device 9 | Minghang District, Shanghai |
| Transcoding Device 5 | Xuanwu District, Nanjing | Transcoding Device 10 | Baiyun District, Guangzhou |

For another example, after receiving a task assignment request, according to the current state sent by the transcoding devices connected to the scheduling device, the scheduling device may determine a transcoding device(s) whose current state is an available state, and then acquire the load information of the transcoding device(s) in the available state. Alternatively, the transcoding device(s) whose health status is healthy may be selected from all the transcoding devices according to the health status sent by the transcoding devices connected to the scheduling device. For example, when a weighted number of tasks in a transcoding device is greater than or equal to a preset threshold, the health status of the transcoding device may be considered to be unhealthy. Accordingly, the health value of the transcoding device may be set to Q = 100. When the weighted number of tasks of the device is less than the preset threshold, the health status of the transcoding device is considered to be healthy. Accordingly, the health value of the transcoding device may be set to Q = M, where M is the average CPU usage of the transcoding device. In this way, when a new task is received by the scheduling device, the scheduling device may query the health status of each transcoding device, and return the IP address of a healthy transcoding device to the client device, to allow the task to be transcoded in the healthy transcoding device. Further, if there are multiple healthy transcoding devices at the same time, the IP address of a transcoding device with a smaller health value may be returned to the client device according to a magnitude of the health value Q, to allow the task to be transcoded on a healthy transcoding device.

In some embodiments, after receiving a task assignment request, the scheduling device may acquire the load information of the plurality of transcoding devices by using other approaches, which the present disclosure is not intended to limit.

The load information of each transcoding device may include a variety of information. For example, the load information may include target requirement information of transcoding tasks carried by a transcoding device, where the target requirement information of a transcoding task may further include a target resolution of the transcoding task and a target frame rate of the transcoding task. Here, the target resolution may refer to a resolution after transcoding of a video (or audio and other formats) associated with the transcoding task, and the target frame rate may refer to a number of frames of images displayed per second in the transcoding task. For example, a transcoding task A requires the transcoding of video 1 from a resolution of 640*360 to a resolution of 1280*720, and the number of frames of video 1 displayed per second is 25 fps. Then, for the transcoding task A, the target resolution is 1280*720, and the target frame rate is 25 fps. For another example, a transcoding task B requires the transcoding of video 2 from a resolution of 1280*720 to a resolution of 848*480, and the number of frames of video 2 displayed per second is 29.97 fps. Then, for the transcoding task B, the target resolution is 848*480, and the target frame rate is 29.97 fps.

Alternatively, the load information may also include usages of a plurality of execution cores in each transcoding device. The usage of an execution core may refer to the usage of each execution core in the CPU of each transcoding device. For example, a transcoding device 1 is a quad-core CPU, that is, the transcoding device 1 has four execution cores. Table 2 shows an example of information for the executing cores in the transcoding device 1. According to the information shown in Table 2, it may be seen that the usage of the execution core 1 in the transcoding device 1 is 40%, the usage of the execution core 2 in the transcoding device 1 is 5%, the usage of the execution core 3 in the transcoding device 1 is 30%, and the usage of the execution core 4 in the transcoding device 1 is 10%.

Table 2: An example of information for executing cores in a transcoding device 1

| Execution Core # | Usage of Execution Core |
|---|---|
| Execution Core 1 | 40% |
| Execution Core 2 | 5% |
| Execution Core 3 | 30% |
| Execution Core 4 | 10% |

Alternatively, the load information may also include identifiers of transcoding tasks carried by each transcoding device. Here, an identifier of a transcoding task may be expressed in a variety of forms. For example, the identifier of a transcoding task may be a Uniform Resource Locator (URL) of the transcoding task. For another example, the identifier of a transcoding task may also be the task name of the transcoding task. The specific form of an identifier is not limited here.

In the embodiments of the present disclosure, a task assignment request may include target requirement information of a to-be-assigned task and an identifier of the to-be-assigned task. Here, the identifier of a to-be-assigned task may be represented by a URL. For example, the identifier of a to-be-assigned task 1 is http://abcom/shipin/12345.html. The target requirement information of a to-be-assigned task may include the target resolution of the to-be-assigned task and the target frame rate of the to-be-assigned task. As one example, the target resolution of the to-be-assigned task 1 is 1280*720, and the target frame rate is 25 fps.

Before performing Step 202, according to the target resolution, the target frame rate, and the identifier of a to-be-assigned task, the scheduling device may further determine whether there exists, within the plurality of transcoding devices, a transcoding task consistent with the target resolution, the target frame rate, and the identifier of the to-be-assigned task. If there exists such a transcoding task, the scheduling device may use a transcoding device corresponding to that transcoding task as the target transcoding device, to allow the client device to establish a connection with the target transcoding device. If such a transcoding task does not exist, the scheduling device may perform the above Step 202.

In this way, the scheduling device may first determine whether there already exists a transcoding task, in the plurality of transcoding devices, that is consistent with the to-be-assigned task, thereby avoiding a problem of repeatedly creating a transcoding task if the to-be-assigned task already exists, which results in a waste of resources.

In Step 202, the current load value of the first transcoding device may be determined according to the target requirement information of at least one transcoding task in the first transcoding device and the device performance of the first transcoding device. There are many specific ways to determine the current load value. In one example, according to the device performance of the first transcoding device, the scheduling device may determine a preset maximum number of tasks corresponding to each piece of target requirement information of each transcoding task carried by the first transcoding device. Next, the current load value of the first transcoding device may be determined according to the preset maximum number of tasks corresponding to each piece of target requirement information in the first transcoding device and the number of transcoding tasks corresponding to each piece of target requirement information in the first transcoding device. In other words, to obtain the current load value of the first transcoding device, it is necessary to first obtain the maximum number of channels (the maximum number of channels may also be considered as a threshold) that may be transcoded by different target requirement information in the first transcoding device. In the embodiments of the present disclosure, the maximum number of channels that may be transcoded by each piece of target requirement information may be obtained through the stress-testing data. For example, the resolution F1 and the frame rate Z1 may allow transcoding of X1 channels, and the resolution F2 and the frame rate Z2 may allow transcoding of X2 channels. For other resolutions, the maximum number of channels that may be transcoded may also be obtained through this approach. In this way, the current load value of each transcoding device may be determined (in fact, the current load value may be considered as a weighted number of tasks of each transcoding device).

Specifically, Table 3 shows an example of transcoding tasks in the first transcoding device. Here, the target resolution corresponding to the transcoding task 1 is 1280*720, and the target frame rate corresponding to the transcoding task 1 is 25 fps; the target resolution corresponding to the transcoding task 2 is 640*360, and the target frame rate corresponding to the transcoding task 2 is 29.97 fps; the target resolution corresponding to the transcoding task 3 is 848*480, and the target frame rate corresponding to the transcoding task 3 is 25 fps; the target resolution corresponding to the transcoding task 4 is 1280*720, and the target frame rate corresponding to the transcoding task 4 is 25 fps; and the target resolution corresponding to the transcoding task 5 is 1280*720, and the target frame rate corresponding to the transcoding task 5 is 29.97 fps. According to the information shown in Table 3, there are four types of target requirement information in the first transcoding device, namely: the target requirement information 1 corresponding to the target resolution of 1280*720 and the target frame rate of 25 fps, the target requirement information 2 corresponding to the target resolution of 640*360 and the target frame rate of 29.97 fps, the target requirement information 3 corresponding to the target resolution of 848*480 and the target frame rate of 25 fps, and the target requirement information 4 corresponding to the target resolution of 1280*720 and the target frame rate of 29.97 fps. According to the device performance of the first transcoding device, the preset maximum number of tasks corresponding to each piece of target requirement information in the transcoding device may be obtained, as shown specifically in Table 4. Here, the preset maximum number of tasks corresponding to the target requirement information 1 in the first transcoding device is 5; the preset maximum number of tasks corresponding to the target requirement information 2 in the first transcoding device is 15; the preset maximum number of tasks corresponding to the target requirement information 3 in the first transcoding device is 10; and the preset maximum number of tasks corresponding to the target preset information 4 in the first transcoding device is 5. In this way, according to the number of tasks corresponding to each piece of target requirement information shown in Table 3, and the preset maximum number of tasks corresponding to each piece of target requirement information shown in Table 4, the current load value of the transcoding device may be calculated to be 0.77 by using Formula (1).

$$A = f_1 \times \frac{1}{X_1} + f_2 \times \frac{1}{X_2} + \cdots + f_n \times \frac{1}{X_n} \qquad \text{Formula (1)}$$

where A is the current load value of the first transcoding device, $f_i$ is the number of tasks corresponding to the i-th target requirement information in the first transcoding device, $X_i$ is the preset maximum number of tasks corresponding to the i-th target requirement information in the first transcoding device, i = 1, 2, ... , n, n is the number of target requirement information of the transcoding tasks carried by the first transcoding device, and n is an integer greater than or equal to 1.

It should be noted that Formula (1) is merely one example. Those skilled in the art may also determine the current load value by using other approaches. For example, a weight may be considered for each piece of target requirement information in Formula (1), details of which will not be specified here.

In this way, the scheduling device may obtain the current load value of the first transcoding device according to the number of tasks and the preset maximum number of tasks of each piece of target requirement information in the first transcoding device. This approach allows a more reasonable calculation of the current load value of the transcoding device, thereby improving the rationality of determining the transcoding device.

Table 3: An example of transcoding tasks in the first transcoding device

| Transcoding Task # | Target Resolution | Target Frame Rate |
|---|---|---|
| Transcoding Task 1 | 1280*720 | 25 fps |
| Transcoding Task 2 | 640*360 | 29.97 fps |
| Transcoding Task 3 | 848*480 | 25 fps |
| Transcoding Task 4 | 1280*720 | 25 fps |
| Transcoding Task 5 | 1280*720 | 29.97 fps |

Table 4: An example of the preset maximum number of tasks for each piece of target requirement information in the first transcoding device

| Target Requirement Information # | Preset Maximum Number of Tasks |
|---|---|
| Target Requirement Information 1 | 5 |
| Target Requirement Information 2 | 15 |
| Target Requirement Information 3 | 10 |
| Target Requirement Information 4 | 5 |

In another example, the scheduling device may determine the performance occupancy of each piece of target requirement information in the first transcoding device according to the device performance of the first transcoding device and the target requirement information of each transcoding task in the first transcoding device, and determine the total performance occupancy of each piece of target requirement information in the first transcoding device according to the number of transcoding tasks corresponding to each piece of target requirement information, so as to obtain the current load value of the first transcoding device.

Specifically, taking the transcoding tasks in the first transcoding device shown in Table 3 as an example, in the first transcoding device, if the performance occupancy of the target requirement information 1 (i.e., the target resolution of 1280*720 and the target frame rate of 25 fps) in the first transcoding device is 20%, the performance occupancy of the target requirement information 2 (i.e., the target resolution of 640*360 and the target frame rate of 29.97 fps) in the first transcoding device is 5%, the performance occupancy of the target requirement information 3 (i.e., the target resolution of 848*480 and the target frame rate of 25 fps) in the first transcoding device is 10%, and the performance occupancy of the target requirement information 4 (i.e., the target resolution of 1280*720 and the target frame rate of 29.97 fps) in the first transcoding device is 25%, according to the number of transcoding tasks corresponding to each piece of target requirement information shown in Table 3, the current load value of the first transcoding device may be calculated to be 76% according to Formula (2):

$$A = f_1 \times C_1 + f_2 \times C_2 + \cdots + f_n \times C_n \qquad \text{Formula (2)}$$

where A is the current load value of the first transcoding device; $f_i$ is the number of tasks corresponding to the i-th target requirement information in the first transcoding device, and $C_i$ is the performance occupancy of the i-th target requirement information in the first transcoding device, i = 1, 2, ... , n, n is the number of target requirement information of the transcoding tasks carried by the first transcoding device, and n is an integer greater than or equal to 1.

It should be noted that Formula (2) is merely one example. Those skilled in the art may also determine the current load value by other approaches. For example, a weight may be considered for each piece of target requirement information in Formula (2), details of which are not specified here.

In other examples, the current load value of the first transcoding device may be determined by a person skilled in the art according to the experience and actual conditions, which the present disclosure is not intended to limit.

In Step 203, there are multiple ways for the scheduling device to determine the target transcoding device. One possible implementation includes that: the scheduling device may determine, from the plurality of transcoding devices, the candidate transcoding device(s) whose current load value is less than a first threshold. If only one candidate transcoding device exists, the candidate transcoding device may be considered as the target transcoding device. If there are multiple candidate transcoding devices, the candidate transcoding device with the smallest current load value may be considered as the target transcoding device. Alternatively, any one of the plurality of candidate transcoding devices may be considered as the target transcoding device, which the present disclosure is not intended to limit.

It should be noted that the first threshold may be set by a person skilled in the art according to experience and actual conditions, which the present disclosure is not intended to limit.

Another possible implementation includes that: the scheduling device may determine, from the plurality of transcoding devices, a target transcoding device whose current load value is less than the first threshold and average CPU usage is less than a second threshold, according to the current load values of the plurality of transcoding devices and the average CPU usages of the plurality of transcoding devices. Here, an average CPU usage may be determined according to the usages of the plurality of execution cores in each transcoding device included in the load information. Specifically, the scheduling device may first determine, from the plurality of transcoding devices, at least one candidate transcoding device whose current load value is less than the first threshold, and then determine, from the at least one candidate transcoding device, a target transcoding device whose average CPU usage is less than the second threshold. Alternatively, the scheduling device may first determine, from the plurality of transcoding devices, at least one candidate transcoding device whose average CPU usage is less than the second threshold, and then determine, from the at least one candidate transcoding device, a target transcoding device whose current load value is less than the first threshold.

It should be noted that the second threshold may be set by a person skilled in the art according to experience and actual conditions, which the present disclosure is not intended to limit.

In this way, when determining the target transcoding device, both the current load value and the average CPU usage of each transcoding device are considered, so that the transcoding device may be selected from different angles, thereby improving the rationality of determining the transcoding device.

Further, there are many ways to determine an average CPU usage. For example, a plurality of execution cores in the first transcoding device may be ranked according to the usage of each execution core in a desending order, and then the average value of the usages of the top N execution cores may be considered as the average CPU usage of the first transcoding device, where N is an integer greater than or equal to 1. Taking the information of the execution cores in the transcoding device 1 shown in Table 2 as an example, the four execution cores in the transcoding device 1 may be ranked according to the usage of each execution core in a desending order: Execution Core 1> Execution Core 3>Execution Core 4>Execution Core 2. If N is set to 2, according to the usage of each execution core shown in Table 2, the average CPU usage of the transcoding device 1 may be calculated to be 35% by using Equation (3).

$$M = \frac{top_1 + top_2 + \cdots + top_N}{N} \qquad \text{Formula (3)}$$

where M is the average CPU usage of the first transcoding device, topj is the usage of the j-th ranked execution core, j = 1, 2, ... , N, and N is an integer greater than or equal to 1.

In this way, the problem of too much calculation when there are too many execution cores in the transcoding device may be avoided, thereby reducing the amount of calculation for the average CPU usage, and further reducing the operation load on the scheduling device.

It should be noted that the foregoing method is merely one example. Those skilled in the art may also use other approaches to determine the average CPU usage according to experience and actual conditions. For example, the usage of each execution core in the m-core CPU at the current moment may be ranked in a desending order, and then the average value of usages of the (1/4*m) cores with a higher usage is taken as the average CPU usage of the first transcoding device. Correspondingly, Formula (3) shown above may also be modified to Formula (4), details of which are not described here.

$$M = \frac{{top_1 + top_2 + \cdots + top_m}/{4}}{{m}/{4}} \qquad \text{Formula (4)}$$

where M is the average CPU usage of the first transcoding device, m is the number of execution cores in the first transcoding device, $top_j$ is the CPU usage of the j-th ranked execution core, j = 1, 2,..., m/4, and m is an integer greater than or equal to 1.

In another example, the average CPU usages of the plurality of execution cores in the first transcoding device may also be used as the average CPU usage of the first transcoding device. Taking the information of the execution cores in the transcoding device 1 shown in Table 2 as an example, the average value of the usages of the four execution cores in the transcoding device 1 may be used as the average CPU usage of the transcoding device 1. That is, the average CPU usage of the transcoding device 1 is 42.5%. This method is quite convenient for calculation.

Another possible implementation includes that: the scheduling device may determine, from the plurality of transcoding devices, a target transcoding device whose current load value is less than the first threshold and predicted load value is less than a third threshold according to the current load values of the plurality of transcoding devices and predicted load values of the plurality of transcoding devices. Here, a predicted load value may be determined according to the current load value of the transcoding device and a load value of the to-be-assigned transcoding task, where the load value of the to-be-assigned task may be determined according to the target requirement information of the to-be-assigned transcoding task. Specifically, the scheduling device may first determine, from the plurality of transcoding devices, at least one candidate transcoding device whose current load value is less than the first threshold, and then determine, from the at least one candidate transcoding device, a target transcoding device whose predicted load value is less than the third threshold. Alternatively, the scheduling device may first determine, from the plurality of transcoding devices, at least one candidate transcoding device whose predicted load value is less than the third threshold, and then determine, from the at least one candidate transcoding device, a target transcoding device whose current load value is less than the first threshold.

It should be noted that the third threshold may be set by a person skilled in the art according to experience and actual conditions, which the present disclosure is not intended to limit.

In this way, when determining the target transcoding device, both the current load value of each transcoding device and the predicted load value of each transcoding device after receiving the to-be-assigned transcoding task are considered, so that the transcoding device may be selected from different angles, thereby improving the rationality of determining the transcoding device.

Further, there are various ways to determine the predicted load value. In one example, the scheduling device may determine respective load value corresponding to the to-be-assigned task in the plurality of transcoding devices according to a preset maximum number of tasks, where the preset maximum number of tasks respectively corresponds to the target requirement information of the to-be-assigned task in the plurality of transcoding devices. Next, in combination with the current load value of each transcoding device, the predicted load value of each transcoding device may be determined. For example, Table 5 shows an example of load information for a plurality of transcoding devices. In the table, the current load value of the transcoding device 1 is 0.77, and the corresponding preset maximum number of tasks of the target requirement information of the to-be-assigned task in the transcoding device 1 is 3, then the corresponding load value of the to-be-assigned task in the transcoding device 1 may be calculated by using Formula (5). The calculated corresponding load value of the to-be-assigned task in the transcoding device 1 is 0.33. Next, the predicted load value of the transcoding device 1 may be calculated to be 1.1 according to Formula (6). The approach of calculating the predicted load value of other remaining transcoding devices may refer to the calculation for the transcoding device 1, details of which will not be described here.

$$P = \frac{1}{X} \qquad \text{Formula (5)}$$

where P is the corresponding load value of the to-be-assigned task in the first transcoding device, X is the corresponding preset maximum number of tasks of the target requirement information of the to-be-assigned task in the first transcoding device.

$$Q = P + A \qquad \text{Formula (6)}$$

where Q is the predicted load value of the first transcoding device, P is the corresponding load value of the to-be-assigned task in the first transcoding device, and A is the current load value of the first transcoding device.

Table 5: An example of load information for a plurality of transcoding devices

| Device Number | Current Load Value | Preset Maximum Number of Tasks | Predicted Load Value |
|---|---|---|---|
| Transcoding Device 1 | 0.77 | 3 | 1.1 |
| Transcoding Device 2 | 0.2 | 5 | 0.4 |
| Transcoding Device 3 | 0.55 | 10 | 0.65 |
| Transcoding Device 4 | 0.9 | 5 | 1.1 |
| Transcoding Device 5 | 0.1 | 3 | 0.43 |

For another example, the scheduling device may use the corresponding performance occupancy of the target requirement information of the to-be-assigned task in each transcoding device as the load value corresponding to the to-be-assigned task in each of the plurality of transcoding devices. Next, in combination with the current load value of each transcoding device, the predicted load value of each transcoding device may be determined.

Another possible implementation includes that: the scheduling device may determine, from the plurality of transcoding devices, a target transcoding device whose current load value is less than the first threshold, average CPU usage is less than the second threshold, and predicted load value is less than the third threshold according to the current load values, the average CPU usages, and the predicted load values of the plurality of transcoding devices. Specifically, the scheduling device may first determine, from the plurality of transcoding devices, at least one initial candidate transcoding device whose current load value is less than the first threshold, then determine, from the at least one initial candidate transcoding device, at least one candidate transcoding device whose average CPU usage is less than the second threshold, and further determine, from the at least one candidate transcoding device, a target transcoding device whose predicted load value is less than the third threshold. Alternatively, the scheduling device may first determine, from the plurality of transcoding devices, at least one initial candidate transcoding device whose current load value is less than the first threshold, then determine, from the at least one initial candidate transcoding device, at least one candidate transcoding device whose predicted load value is less than the third threshold, and further determine, from the at least one candidate transcoding device, a target transcoding device whose average CPU usage is less than the second threshold. Alternatively, the scheduling device may first determine, from the plurality of transcoding devices, at least one initial candidate transcoding device whose average CPU usage is less than the second threshold, then determine, from the at least one initial candidate transcoding device, at least one candidate transcoding device whose current load value is less than the first threshold, and further determine, from the at least one candidate transcoding device, a target transcoding device whose predicted load value is less than the third threshold. The specific way of determining the target transcoding device is not limited here.

In this way, when determining the target transcoding device, the current load value of each transcoding device, the average CPU usage of each transcoding device, and the predicted load value of each transcoding device after receiving the to-be-transcoded task may all be considered. Accordingly, a transcoding device may be selected from different angles, thereby improving the rationality of determining the transcoding device.

Embodiment 2:

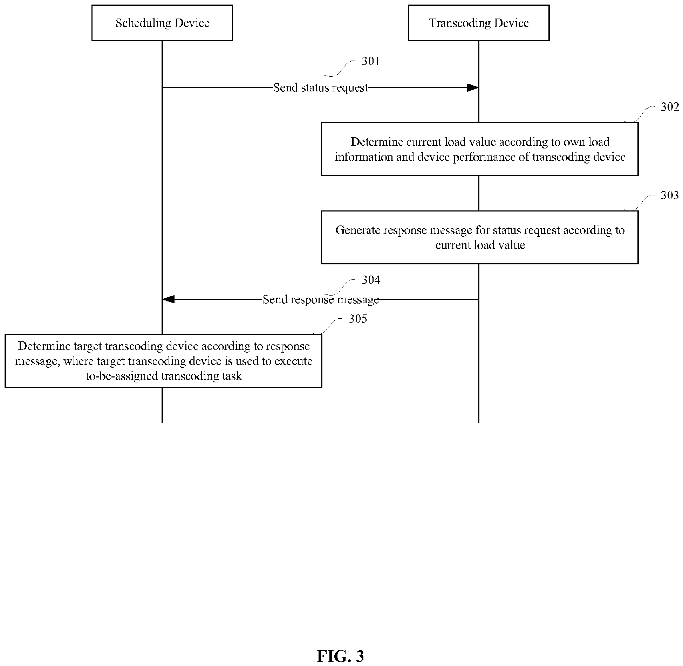

Based on the system architecture shown in FIG. 1, FIG. 3 exemplarily shows a flowchart corresponding to another method for assigning a transcoding task according to some embodiments of the present disclosure. The method includes the following steps:

Step 301: The scheduling device sends a status request to a transcoding device.
Step 302: After receiving the status request sent by the scheduling device, the transcoding device determines the current load value according to its own load information and its own device performance of the transcoding device.
Step 303: The transcoding device generates a response message for the status request according to the current load value.
Step 304: The transcoding device sends the response message to the scheduling device.
Step 305: The scheduling device determines, according to the response message, a target transcoding device, where the target transcoding device is configured to perform a to-be-assigned transcoding task.

In this way, the transcoding device may calculate the current load value itself according to the load information of the device, which may reduce the amount of calculation on the scheduling device, thereby reducing the operation load on the scheduling device. Next, the scheduling device may select a transcoding device with a smaller current load value as the target transcoding device. Compared with the existing technologies that directly selects the target transcoding device according to the IP address of a transcoding device, the embodiments of the present disclosure take full consideration of the load status of a transcoding device, thereby effectively avoiding a situation in which a transcoding task is unable to be executed in time due to the overload of the transcoding device, which improves the efficiency of video transcoding.

In Step 301 and Step 302, the status request may include target requirement information of the to-be-assigned task and the identifier of the to-be-assigned task. The identifier of the to-be-assigned task may be represented by a URL. For example, the identifier of the to-be-assigned task is http://abcom/shipin/12345.html. The target requirement information of the to-be-assigned task may include the target resolution of the to-be-assigned task and the target frame rate of the to-be-assigned task. For example, the target resolution of a to-be-assigned task 1 is 1280*720, and the target frame rate of the to-be-assigned task 1 is 25 fps.

Further, after receiving the status request sent by the scheduling device, according to the target resolution, the target frame rate, and the identifier of a to-be-assigned task, the transcoding device may first determine, among the transcoding tasks carried by the transcoding device, whether there exists a transcoding task that is consistent with the target resolution, the target frame rate, and the identifier of the to-be-assigned task. If there exists such a transcoding task, an instruction message may be sent to the scheduling device, to allow the scheduling device to use the transcoding device as the target transcoding device. If such a transcoding task does not exist, the transcoding device may continue to perform the above Step 302.

In this way, the transcoding device may first determine whether there is a transcoding task that is consistent with the to-be-assigned task, thereby avoiding repeatedly creating the transcoding task if the to-be-assigned task already exists, which results in waste of resources.

In the embodiments of the present disclosure, the load information may include a variety of information. For example, the load information may include target requirement information of transcoding tasks carried by the transcoding device, where the target requirement information of a transcoding task may further include a target resolution of the transcoding task and a target frame rate of the transcoding task. Here, the target resolution may refer to a resolution after the transcoding of a video (or audio or other formats) corresponding to the transcoding task, and the target frame rate may refer to a number of frames of images displayed per second in the transcoding task.

For another example, the load information may also include the usages of a plurality of execution cores in each transcoding device. A usage of an execution core(s) may refer to the usage of each execution core in the CPU of each transcoding device.

As another example, the load information may also include an identifier of a carried transcoded task. Here, the identifier of a carried transcoding task may be the URL of the transcoding task, or may be the task name of the transcoding task, which is not limited here.

It should be noted that, for specific examples of the load information, reference may be made to the description provided in Embodiment 1, details of which will not be described again here.

The following describes in detail how a transcoding device performs calculations based on its own load information.

In one example, the transcoding device may determine the current load value based on the target requirement information of each transcoding task in the load information and its own device performance of the transcoding device. For example, the transcoding device may determine the preset maximum number of tasks corresponding to each piece of target requirement information of each carried transcoding task according to the device performance. The transcoding device may then determine the current load value of the transcoding device according to the preset maximum number of tasks corresponding to each piece of target requirement information and the number of transcoding tasks corresponding to each piece of target requirement information. Specifically, the current load value may be obtained by Formula (1) in Embodiment 1, details of which will not be described again here. It should be noted that Formula (1) is merely one example. Those skilled in the art may also determine the current load value by other approaches. For example, a weight may be considered for each piece of target requirement information in Formula (1), which the present disclosure is not intended to limit. By using the above approach, the current load value of the transcoding device may be calculated more reasonably, thereby improving the rationality of determining a transcoding device.

For another example, the transcoding device may determine the performance occupancy of each piece of target requirement information in the transcoding device according to the device performance and the target requirement information of each transcoding task, and determine the total performance occupancy of each piece of target requirement information in the transcoding device according to the number of transcoding tasks corresponding to each piece of target requirement information, so as to obtain the current load value of the transcoding device. Specifically, the current load value of the transcoding device may be obtained by Formula (2) in Embodiment 1, details of which will not be described again here. It should be noted that Formula (2) is merely one example. Those skilled in the art may also determine the current load value by other approaches. For example, a weight may be considered for each piece of target requirement information in Formula (2), which the present disclosure is not intended to limit.

In yet another example, the transcoding device may determine the average CPU usage based on the usages of a plurality of execution cores in the load information and the performance of the device itself.

There are many ways to determine the average CPU usage. For example, the transcoding device may rank a plurality of execution cores in a desending order according to the usage of each execution core, and then may determine the average value of the usages of the top N execution cores as the average CPU usage, where N is an integer greater than or equal to 1. Specifically, the average CPU usage may be obtained by Formula (3) in Embodiment 1, details of which will not be described again here. In this way, the problem of too much calculation when there are too many execution cores in the transcoding device may be avoided, thereby reducing the amount of calculation of the average CPU usage, and further reducing the operation load in the transcoding device.

It should be noted that the above method is merely one example. Those skilled in the art may also use other methods to determine the average CPU usage according to experience and actual conditions. For example, the usage of each execution core in the m-core CPU at the current moment may be ranked from large to small, and then the average value of the usages of the (1/4*m) cores with a higher usage is taken as the average CPU usage of the transcoding device. Refer to Formula (4) in Embodiment 1 for more details.

As another example, the transcoding device may also use the average value of the usages of the plurality of execution cores as the average CPU usage. This method is more convenient for calculation.

In another example, the transcoding device may determine its predicted load value according to the target requirement information of the to-be-assigned task and the current load value of the transcoding device.

Further, there are various ways to determine the predicted load value. For example, the transcoding device may determine the load value of the to-be-assigned task according to the preset maximum number of tasks, where the preset maximum number of tasks corresponds to the target requirement information of the to-be-assigned task, in the transcoding device. Next, in combination with the current load value of the transcoding device, the predicted load value of the transcoding device may be determined. Specifically, the predicted load value may be obtained by Formula (5) and Formula (6) in Embodiment 1, details of which will not be described again here.

As another example, the transcoding device may use the performance occupancy of the target requirement information of the to-be-assigned task in the transcoding device as the load value of the to-be-assigned task. Next, in combination with the current load value of the transcoding device, the predicted load value of the transcoding device may be determined.

In Step 303 and Step 304, the response message, for the status request, generated by the transcoding device may include various forms of content. For example, the response message for the status request may include only the current load value of the transcoding device; or the response message for the status request may include the current load value and the average CPU usage of the transcoding device; or the response message for the status request may include the current load value and the predicted load value of the transcoding device; or the response message for the status request may include the current load value, the average CPU usage, and the predicted load value of the transcoding device. The specific forms of content of the response message are not limited here.

Correspondingly, in Step 305, the content included in the response message, for the status request, received by the scheduling device is different, and the way of determining the target transcoding device is also different.

In one example, the response message includes the current load value of the transcoding device. The scheduling device may determine, from a plurality of transcoding devices, candidate transcoding devices whose current load value is less than the first threshold. If there is only one candidate transcoding device, the candidate transcoding device may be considered as the target transcoding device. If a plurality of candidate transcoding devices exist, the candidate transcoding device with the smallest current load value may be considered as the target transcoding device. Alternatively, any one of the plurality of candidate transcoding devices may be considered as the target transcoding device. The specific way of determining the target transcoding device is not limited here.

It should be noted that the first threshold may be set by a person skilled in the art according to experience and actual conditions, which the present disclosure is not intended to limit.

In another example, the response message includes the current load value and the average CPU usage of the transcoding device. According to the current load values of the plurality of transcoding devices and the average CPU usages of the plurality of transcoding devices, the scheduling device may determine, from the plurality of transcoding devices, a target transcoding device whose current load value is less than the first threshold and average CPU usage is less than a second threshold. Specifically, the scheduling device may first determine, from the plurality of transcoding devices, at least one candidate transcoding device whose current load value is less than the first threshold, and then determine, from the at least one candidate transcoding device, a target transcoding device whose average CPU usage is less than the second threshold. Alternatively, the scheduling device may first determine, from the plurality of transcoding devices, at least one candidate transcoding device whose average CPU usage is less than the second threshold, and then determine, from the at least one candidate transcoding device, a target transcoding device whose current load value is less than the first threshold.

It should be noted that the second threshold may be set by a person skilled in the art according to experience and actual conditions, which the present disclosure is not intended to limit.

In this way, when determining the target transcoding device, both the current load value and the average CPU usage of each transcoding device are considered. Accordingly, a transcoding device may be selected from different angles, thereby improving the rationality of determining the transcoding device.

In another example, the response message includes the current load value and the predicted load value of the transcoding device. According to the current load values of the plurality of transcoding devices and the predicted load values of the plurality of transcoding devices, the scheduling device may determine, from the plurality of transcoding devices, a target transcoding device whose current load value is less than the first threshold and predicted load value is less than the third threshold. Specifically, the scheduling device may first determine, from the plurality of transcoding devices, at least one candidate transcoding device whose current load value is less than the first threshold, and then determine, from the at least one candidate transcoding device, a target transcoding device whose predicted load value is less than the third threshold. Alternatively, the scheduling device may first determine, from the plurality of transcoding devices, at least one candidate transcoding device whose predicted load value is less than the third threshold, and then determine, from the at least one candidate transcoding device, a target transcoding device whose current load value is less than the first threshold.

It should be noted that the third threshold may be set by a person skilled in the art according to experience and actual conditions, which the present disclosure is not intended to limit.

In this way, when determining the target transcoding device, both the current load value of each transcoding device and the predicted load value of each transcoding device after receiving a to-be-assigned transcoding task are considered. Accordingly, a transcoding device may be selected from different angles, thereby improving the rationality of determining the transcoding device.

In another example, the response message includes the current load value, the average CPU usage, and the predicted load value of the transcoding device. According to the current load values, the average CPU usages, and the predicted load values of the plurality of transcoding devices, the scheduling device may determine, from the plurality of transcoding devices, a target transcoding device whose current load value is less than the first threshold, average CPU usage is less than the second threshold, and predicted load value is less than the third threshold. Specifically, the scheduling device may first determine, from the plurality of transcoding devices, at least one initial candidate transcoding device whose current load value is less than the first threshold, then determine, from the at least one initial candidate transcoding device, at least one candidate transcoding device whose average CPU usage is less than the second threshold, and further determine, from the at least one candidate transcoding device, a target transcoding device whose predicted load value is less than the third threshold. Alternatively, the scheduling device may first determine, from the plurality of transcoding devices, at least one initial candidate transcoding device whose current load value is less than the first threshold, then determine, from the at least one initial candidate transcoding device, at least one candidate transcoding device whose predicted load value is less than the third threshold, and further determine, from the at least one candidate transcoding device, a target transcoding device whose average CPU usage is less than the second threshold. Alternatively, the scheduling device may first determine, from the plurality of transcoding devices, at least one initial candidate transcoding whose average CPU usage is less than the second threshold, then determine, from the at least one initial candidate transcoding device, at least one candidate transcoding device whose current load value is less than the first threshold, and further determine, from the at least one candidate target transcoding device, a target transcoding device whose predicted load value is less than the third threshold. The specific way of determining the target transcoding device is not limited here.

In this way, when determining the target transcoding device, the current load value of each transcoding device, the average CPU usage of each transcoding device, and the predicted load value of each transcoding device after receiving a to-be-transcoded task may all be considered. Accordingly, a transcoding device may be selected from different angles, thereby improving the rationality of determining the transcoding device.

Embodiment 3

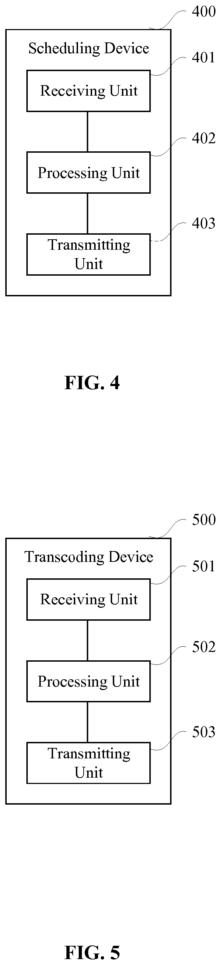

Based on the similar inventive concept, FIG. 4 exemplarily shows a schematic structural diagram of a scheduling device according to some embodiments of the present disclosure. As shown in FIG. 4, the scheduling device 400 includes a receiving unit 401, a processing unit 402, and a transmitting unit 403.

The receiving unit 401 is configured to acquire load information of a plurality of transcoding devices after receiving a task assignment request sent by a client device, where load information of each transcoding device includes target requirement information of transcoding tasks carried by the transcoding device, and target requirement information of a transcoding task includes a target resolution of the transcoding task and a target frame rate of the transcoding task.

The processing unit 402 is configured to, for a first transcoding device, determine a current load value of the first transcoding device according to target requirement information of at least one transcoding task in the first transcoding device and device performance of the first transcoding device, the first transcoding device being any one of the plurality of transcoding devices; and determine, from the plurality of transcoding devices, a target transcoding device whose current load value is less than a first threshold according to current load values of the plurality of transcoding devices.

The transmitting unit 403 is configured to return a response message for the task assignment request to the client device, where the response message is used to instruct the client device to send a transcoding task to the target transcoding device.

In one implementation, the processing unit 402 is specifically configured to:

determine, according to the device performance of the first transcoding device, a preset maximum number of tasks corresponding to each piece of target requirement information of each transcoding task carried by the first transcoding device; and
determine the current load value of the first transcoding device according to the preset maximum number of tasks corresponding to each piece of target requirement information in the first transcoding device and the number of transcoding tasks corresponding to each piece of target requirement information in the first transcoding device.

In one implementation, the current load value is determined by:

$$A = f_1 \times \frac{1}{X_1} + f_2 \times \frac{1}{X_2} + \cdots + f_n \times \frac{1}{X_n}$$

where A is the current load value of the first transcoding device, $f_i$ is the number of tasks corresponding to the i-th target requirement information in the first transcoding device, $X_i$ is the preset maximum number of tasks corresponding to the i-th target requirement information in the first transcoding device, i = 1, 2, ... , n, n is the number of target requirement information of the transcoding tasks carried by the first transcoding device, and n is an integer greater than or equal to 1.

In one implementation, the load information of each transcoding device further includes usages of a plurality of execution cores in each transcoding device; and
the processing unit 402 is specifically configured to:
determine, from the plurality of transcoding devices, a target transcoding device whose current load value is less than the first threshold and average CPU usage is less than a second threshold according to the current load values of the plurality of transcoding devices and average CPU usages of the plurality of transcoding devices, where an average CPU usage of a transcoding device is determined according to the usages of the plurality of execution cores in the transcoding device.

In one implementation, the processing unit 402 is specifically configured to:

rank a plurality of execution cores in the first transcoding device according to a usage of each execution core in a desending order; and
determine an average value of usages of top N execution cores as the average CPU usage of the first transcoding device, where N is an integer greater than or equal to 1

In one implementation, the processing unit 402 is specifically configured to:

determine, from the plurality of transcoding devices, at least one candidate transcoding device whose current load value is less than the first threshold;
determine an average CPU usage of each candidate transcoding device according to usages of a plurality of execution cores in each candidate transcoding device; and
determine, from the at least one candidate transcoding device, a target transcoding device whose average CPU usage is less than the second threshold.

In one implementation, the task assignment request includes target requirement information of a to-be-assigned task, and the target requirement information of the to-be-assigned task includes a target resolution of the to-be-assigned task and a target frame rate of the to-be-assigned task; and
the processing unit 402 is specifically configured to:
determine, from the plurality of transcoding devices, a target transcoding device whose current load value is less than the first threshold and predicted load value is less than a third threshold according to the current load values of the plurality of transcoding devices and predicted load values of the plurality of transcoding devices, where a predicted load value of a transcoding device is determined according to a current load value of the transcoding device and a load value of the to-be-assigned transcoding task, and the load value of the to-be-assigned task is determined according to the target requirement information of the to-be-assigned transcoding task.

In one implementation, the task assignment request includes the target requirement information of the to-be-assigned task and an identifier of the to-be-assigned task, and the target requirement information of the to-be-assigned task includes the target resolution of the to-be-assigned task and the target frame rate of the to-be-assigned task, and the load information of each transcoding device further includes identifiers of transcoding tasks carried by the transcoding device; and

the processing unit 402 is further configured to: before determining the current load value of the first transcoding device: determine, among transcoding tasks carried by the plurality of transcoding devices, that there exists no transcoding task that is consistent with the target resolution of the to-be-assigned task, the target frame rate of the to-be-assigned task, and the identifier of the to-be-assigned task.

Embodiment 4:

Based on the similar inventive concept, FIG. 5 exemplarily shows a schematic structural diagram of a transcoding device according to some embodiments of the present disclosure. As shown in FIG. 5, the transcoding device 500 includes a receiving unit 501, a processing unit 502, and a transmitting unit 503.

The receiving unit 501 is configured to receive a status request sent by a scheduling device.

The processing unit 502 is configured to determine a current load value according to load information of the transcoding device and device performance of the transcoding device, where the load information includes target requirement information of at least one transcoding task carried by the transcoding device, and target requirement information of a transcoding task includes a target resolution of the transcoding task and a target frame rate of the transcoding task; and generate a response message for the status request according to the current load value.

The transmitting unit 503 is configured to transmit the response message to the scheduling device, to allow the scheduling device to determine a target transcoding device according to the response message, where the target transcoding device is configured to perform a to-be-assigned task.

In one implementation, the processing unit 502 is specifically configured to:

determine a preset maximum number of tasks corresponding to each piece of target requirement information of each carried transcoding task according to the device performance; and
determine the current load value of the transcoding device according to the preset maximum number of tasks corresponding to each piece of target requirement information and the number of transcoding tasks corresponding to each piece of target requirement information.

In one implementation, the current load value is determined by:

$$A = f_1 \times \frac{1}{X_1} + f_2 \times \frac{1}{X_2} + \cdots + f_n \times \frac{1}{X_n}$$

where A is the current load value of the transcoding device, $f_i$ is the number of tasks corresponding to the i-th target requirement information in the transcoding device, $X_i$ is the preset maximum number of tasks corresponding to the i-th target requirement information in the transcoding device, i = 1, 2, ... , n, n is the number of target requirement information of transcoding tasks carried by the transcoding device, and n is an integer greater than or equal to 1.

In one implementation, the load information further includes usages of a plurality of execution cores; and the processing unit 502 is further configured to:

determine an average CPU usage according to the usages of the plurality of execution cores; and
generate the response message for the status request according to the current load value and the determined average CPU usage.

In one implementation, the processing unit 502 is specifically configured to:

rank the plurality of execution cores according to a usage of each execution core in a desending order; and
determine an average value of usages of top N execution cores as the average CPU usage, where N is an integer greater than or equal to 1.

In one implementation, the status request includes target requirement information of a to-be-assigned task, and the target requirement information of the to-be-assigned task includes a target resolution of the to-be-assigned task and a target frame rate of the to-be-assigned task; and
the processing unit 502 is further configured to:

> determine a load value of the to-be-assigned task according to the target requirement information of the to-be-assigned task;
> determine a predicted load value of the transcoding device according to the current load value of the transcoding device and the load value of the to-be-assigned task; and
> generate the response message for the status request according to the current load value and the predicted load value.

In one implementation, the status request includes the target requirement information of the to-be-assigned task, an identifier of the to-be-assigned task, and the target requirement information of the to-be-assigned task includes the target resolution of the to-be-assigned task and the target frame rate of the to-be-assigned task; and
the processing unit 502 is further configured to: before determining the current load value, determine, among transcoding tasks carried by the transcoding device, that there exists no transcoding task that is consistent with the target resolution of the to-be-assigned task, the target frame rate of the to-be-assigned task, and the identifier of the to-be-assigned task.

In this way, the scheduling device may calculate the load value of each transcoding device according to the load information of each transcoding device, so that a transcoding device with a smaller load value may be selected as the target transcoding device. Compared with the existing technologies that directly select the target transcoding device according to the IP address of a transcoding device, the embodiments of the present disclosure take full consideration of the load status of a transcoding device, which effectively avoids a situation in which a transcoding task is unable to be performed in time due to the overload of the transcoding device, thereby improving the efficiency of video transcoding.

Those skilled in the art will appreciate that embodiments of the present disclosure may be provided as a method, system, or computer program product. Accordingly, the present disclosure may take the form of an entire hardware embodiment, an entire software embodiment, or a combination of software and hardware embodiment. In addition, the present disclosure may take the form of a computer program product executing on one or more computer-readable storage media (including but not limited to disk storage, CD-ROM, optical storage, etc.) including computer executable program code.

The present disclosure has been described with reference to the flowcharts and/or block diagrams of methods, devices (systems), and computer program products according to the embodiments of the present disclosure. It is to be understood that each individual flow and/or block of the flowcharts and/or block diagrams, or a combination thereof, may be implemented by computer program instructions. These computer program instructions may be provided to a processor of a general purpose computer, specialized computer, embedded processor, or other programmable data processing device to produce a machine, which allows a production of an apparatus for implementing the functions specified by one or more flows of the flowcharts and/or one or more blocks of the block diagrams through executing the instructions by a processor of a computer or another programmable data processing device.

These computer program instructions may also be stored in a computer-readable memory that can direct a computer or another programmable data processing device to function in a specified manner, which allows a product, containing an instruction apparatus, to be produced by the instructions stored in the computer-readable memory. The instruction apparatus implements the functions specified in one or more flows of the flowcharts and/or one or more blocks of the block diagrams.

These computer program instructions may also be loaded onto a computer or another programmable data processing device, to allow a series of operational steps to be implemented on the computer or another programmable data processing device to produce a computer implemented process. Accordingly, the instructions implemented on the computer or another programmable data processing device provide operations for achieving the functions specified in one or more flows of the flowcharts and/or one or more blocks of the block diagrams.

Although preferred embodiments of the present disclosure have been described, these embodiments may be altered or modified by a person skilled in the art once the essential and creative concepts are recognized. Accordingly, the appended claims are intended to be interpreted as covering the preferred embodiments and any modifications and variations that fall within the scope of the present disclosure.

Clearly, a person skilled in the art may make various modifications and variations to the present disclosure without departing from the spirit and scope of the present disclosure. Accordingly, if these medications and variations of the present disclosure fall with the scope of the claims of the present disclosure or the equivalent technologies, the present disclosure intends to cover these modifications and variations.

**Claims**

1. A method for assigning a transcoding task, comprising:

   after receiving a task assignment request sent by a client device, acquiring, by a scheduling device, load information of a plurality of transcoding devices, wherein load information of each transcoding device includes target requirement information of transcoding tasks carried by the transcoding device, and the target requirement information of a transcoding task includes a target resolution of the transcoding task and a target frame rate of the transcoding task;

   for a first transcoding device, determining, by the scheduling device, a current load value of the first transcoding device according to target requirement information of at least one transcoding task in the first transcoding device and device performance of the first transcoding device, wherein the first transcoding device is any one of the plurality of transcoding devices;

   determining, by the scheduling device, from the plurality of transcoding devices, a target transcoding device whose current load value is less than a first threshold according to current load values of the plurality of transcoding devices, and returning, by the scheduling device, a response message for the task assignment request to the client device, wherein the response message is used to instruct the client device to send a transcoding task to the target transcoding device.

2. The method according to claim 1, wherein determining, by the scheduling device, the current load value of the first transcoding device according to the target requirement information of at least one transcoding task in the first transcoding device and the device performance of the first transcoding device further includes:

   determining, by the scheduling device, a preset maximum number of tasks corresponding to each piece of target requirement information of each transcoding task carried by the first transcoding device according to the device performance of the first transcoding device; and

   determining, by the scheduling device, the current load value of the first transcoding device according to the preset maximum number of tasks corresponding to each piece of target requirement information in the first transcoding device and the number of transcoding tasks corresponding to each piece of target requirement information in the first transcoding device.

3. The method according to claim 2, wherein the current load value is determined by:

$$A = f_1 \times \frac{1}{X_1} + f_2 \times \frac{1}{X_2} + \cdots + f_n \times \frac{1}{X_n}$$

   wherein A is the current load value of the first transcoding device, $f_i$ is the number of tasks corresponding to the i-th target requirement information in the first transcoding device, $X_i$ is the preset maximum number of tasks corresponding to the i-th target requirement information in the first transcoding device, i = 1, 2, ... , n, n is the number of target requirement information of transcoding tasks carried by the first transcoding device, and n is an integer greater than or equal to 1.

4. The method according to claim 1, wherein:

   the load information of each transcoding device further includes usages of a plurality of execution cores in each transcoding device; and

   determining, by the scheduling device, from the plurality of transcoding devices, a target transcoding device whose current load value is less than a first threshold according to current load values of the plurality of transcoding devices further includes:

   determining, by the scheduling device, from the plurality of transcoding devices, a target transcoding device whose current load value is less than the first threshold and average CPU usage is less than a second threshold according to the current load values of the plurality of transcoding devices and average CPU usages of the plurality of transcoding devices, wherein an average CPU usage of a transcoding device is determined according to usages of a plurality of execution cores in the transcoding device.

5. The method according to claim 4, wherein determining an average CPU usage of the first transcoding device according to usages of a plurality of execution cores in the first transcoding device further includes:

ranking, by the scheduling device, the plurality of execution cores in the first transcoding device according to a usage of each execution core in a desending order; and

determining, by the scheduling device, an average value of usages of top N execution cores as an average CPU usage of the first transcoding device, wherein N is an integer greater than or equal to 1.

6. The method according to claim 4, wherein determining, from the plurality of transcoding devices, a target transcoding device whose current load value is less than the first threshold and average CPU usage is less than the second threshold further includes:

determining, by the scheduling device, from the plurality of transcoding devices, at least one candidate transcoding device whose current load value is less than the first threshold;

determining, by the scheduling device, an average CPU usage of each candidate transcoding device according to usages of a plurality of execution cores in each candidate transcoding device; and

determining, by the scheduling device, from the at least one candidate transcoding device, a target transcoding device whose average CPU usage is less than the second threshold.

7. The method according to claim 1, wherein:

the task assignment request includes target requirement information of a to-be-assigned task, and the target requirement information of the to-be-assigned task includes a target resolution of the to-be-assigned task and a target frame rate of the to-be-assigned task; and

determining, by the scheduling device, from the plurality of transcoding devices, a target transcoding device whose current load value is less than the first threshold according to the current load values of the plurality of transcoding devices further includes: dete

rmining, by the scheduling device, from the plurality of transcoding devices, a target transcoding device whose current load value is less than the first threshold and predicted load value is less than a third threshold according to the current load values of the plurality of transcoding devices and predicted load values of the plurality of transcoding devices, wherein a predicted load value of a transcoding device is determined according to a current load value of the transcoding device and a load value of the to-be-assigned transcoding task, and the load value of the to-be-assigned task is determined according to the target requirement information of the to-be-assigned transcoding task.

8. The method according to any one of claims 1 to 7, wherein:

the task assignment request includes the target requirement information of the to-be-assigned task and an identifier of the to-be-assigned task, and the target requirement information of the to-be-assigned task includes the target resolution of the to-be-assigned task and the target frame rate of the to-be-assigned task, and the load information of each transcoding device further includes identifiers of transcoding tasks carried by the transcoding device; and

after obtaining, by the scheduling device, the load information of the plurality of transcoding devices and before determining, by the scheduling device, the current load value of the first transcoding device, the method further includes:

determining, by the scheduling device, that there exists no transcoding task, among transcoding tasks carried by the plurality of transcoding devices, that is consistent with the target resolution of the to-be-assigned task, the target frame rate of the to-be-assigned task, and the identifier of the to-be-assigned task.

9. A method for assigning a transcoding task, comprising:

after receiving a status request sent by a scheduling device, determining, by a transcoding device, current load value according to load information of the transcoding device and device performance of the transcoding device, wherein the load information includes target requirement information of at least one transcoding task carried by the transcoding device, and target requirement information of a transcoding task includes a target resolution of the transcoding task and a target frame rate of the transcoding task;

generating, by the transcoding device, a response message for the status request according to the current load value;

transmitting, by the transcoding device, the response message to the scheduling device, to allow the scheduling device to determine a target transcoding device according to the response message, wherein the target transcoding device is configured to perform a to-be-assigned transcoding task.

**10.** The method according to claim 9, wherein determining, by the transcoding device, the current load value according to the load information and the device performance of the transcoding device further includes:

determining, by the transcoding device, a preset maximum number of tasks corresponding to each piece of target requirement information of each carried transcoding task according to the device performance; and
determining, by the transcoding device, the current load value of the transcoding device according to the preset maximum number of tasks corresponding to each piece of target requirement information and the number of transcoding tasks corresponding to each piece of target requirement information.

**11.** The method according to claim 10, wherein the current load value is determined by:

$$A = f_1 \times \frac{1}{X_1} + f_2 \times \frac{1}{X_2} + \cdots + f_n \times \frac{1}{X_n}$$

wherein A is the current load value of the transcoding device, $f_i$ is the number of tasks corresponding to the i-th target requirement information in the transcoding device, $X_i$ is the preset maximum number of tasks corresponding to the i-th target requirement information in the transcoding device, i = 1, 2, ..., n, n is the number of target requirement information of transcoding tasks carried by the transcoding device, and n is an integer greater than or equal to 1.

**12.** The method according to claim 9, wherein the load information further includes usages of a plurality of execution cores, and the method further includes:

determining, by the transcoding device, an average CPU usage according to the usages of the plurality of execution cores; and
wherein generating, by the transcoding device, the response message for the status request according to the current load value further includes:
generating, by the transcoding device, the response message for the status request according to the current load value and the determined average CPU usage.

**13.** The method according to claim 12, wherein determining, by the transcoding device, the average CPU usage according to the usages of the plurality of execution cores further includes:

ranking, by the transcoding device, the plurality of execution cores according to a usage of each execution core in a desending order; and
determining, by the transcoding device, an average value of usages of top N execution cores as the average CPU usage, wherein N is an integer greater than or equal to 1.

**14.** The method according to claim 9, wherein the status request includes target requirement information of a to-be-assigned task, and the target requirement information of the to-be-assigned task includes a target resolution and a target frame rate of the to-be-assigned task, and the method further includes:

determining, by the transcoding device, a load value of the to-be-assigned task according to the target requirement information of the to-be-assigned task;
determining, by the transcoding device, a predicted load value of the transcoding device according to the current load value of the transcoding device and the load value of the to-be-assigned task; and
wherein generating, by the transcoding device, the response message for the status request according to the current load value further includes:
generating, by the transcoding device, the response message for the status request according to the current load value and the predicted load value of the transcoding device.

**15.** The method according to any one of claims 9 to 13, wherein:

the status request includes the target requirement information of the to-be-assigned task and an identifier of the to-be-assigned task, and the target requirement information of the to-be-assigned task includes the target resolution of the to-be-assigned task and the target frame rate of the to-be-assigned task; and
after receiving, by the transcoding device, the status request sent by the scheduling device and before determining, by the transcoding device, the current load value, the method further includes:

determining, by the transcoding device, that there exists no transcoding task, in transcoding tasks carried by the transcoding device, that is consistent with the target resolution of the to-be-assigned task, the target frame rate of the to-be-assigned task, and the identifier of the to-be-assigned task.

16. A scheduling device, comprising:

a receiving unit that is configured to acquire load information of a plurality of transcoding devices after receiving a task assignment request sent by a client device, wherein load information of each transcoding device includes target requirement information of transcoding tasks carried by the transcoding device, and target requirement information of a transcoding task includes a target resolution of the transcoding task and a target frame rate of the transcoding task;
a processing unit that is configured to, for a first transcoding device, determine a current load value of the first transcoding device according to target requirement information of at least one transcoding task in the first transcoding device and device performance of the first transcoding device, the first transcoding device being any one of the plurality of transcoding devices, and determine, from the plurality of transcoding devices, a target transcoding device whose current load value is less than a first threshold according to current load values of the plurality of transcoding devices; and
a transmitting unit that is configured to return a response message for the task assignment request to the client device, wherein the response message is used to instruct the client device to send a transcoding task to the target transcoding device.

17. The scheduling device according to claim 16, wherein the processing unit is further configured to:

determine, according to the device performance of the first transcoding device, a preset maximum number of tasks corresponding to each piece of target requirement information of each transcoding task carried by the first transcoding device; and
determine the current load value of the first transcoding device according to a preset maximum number of tasks corresponding to each piece of target requirement information in the first transcoding device and the number of transcoding tasks corresponding to each piece of target requirement information in the first transcoding device.

18. The scheduling device according to claim 17, wherein the current load value is determined by:

$$A = f_1 \times \frac{1}{X_1} + f_2 \times \frac{1}{X_2} + \cdots + f_n \times \frac{1}{X_n}$$

wherein A is the current load value of the first transcoding device, $f_i$ is the number of tasks corresponding to the i-th target requirement information in the first transcoding device, $X_i$ is the preset maximum number of tasks corresponding to the i-th target requirement information in the first transcoding device, i = 1, 2, ... , n, n is the number of target requirement information of transcoding tasks carried by the first transcoding device, and n is an integer greater than or equal to 1.

19. The scheduling device according to claim 16, wherein:

the load information of each transcoding device further includes usages of a plurality of execution cores in each transcoding device; and
the processing unit is further configured to:
determine, from the plurality of transcoding devices, a target transcoding device whose current load value is less than the first threshold and average CPU usage is less than a second threshold according to the current load values of the plurality of transcoding devices and average CPU usages of the plurality of transcoding devices, wherein an average CPU usage of a transcoding device is determined according to usages of a plurality of execution cores in the transcoding device.

20. The scheduling device according to claim 19, wherein the processing unit is further configured to:

rank a plurality of execution cores in the first transcoding device according to a usage of each execution core in a desending order; and
determine an average value of usages of top N execution cores as an average value of usages of the first transcoding device, wherein N is an integer greater than or equal to 1.

21. The scheduling device according to claim 19, wherein the processing unit is further configured to:

determine, from the plurality of transcoding devices, at least one candidate transcoding device whose current load value is less than the first threshold;
determine an average CPU usage of each candidate transcoding device according to usages of a plurality of execution cores in each candidate transcoding device; and
determine, from the at least one candidate transcoding device, a target transcoding device whose average CPU usage is less than the second threshold.

22. The scheduling device according to claim 16, wherein:

the task assignment request includes target requirement information of a to-be-assigned task, and the target requirement information of the to-be-assigned task includes a target resolution of the to-be-assigned task and a target frame rate of the to-be-assigned task; and
the processing unit is further configured to:
determine, from the plurality of transcoding devices, a target transcoding device whose current load value is less than the first threshold and predicted load value is less than a third threshold according to the current load values of the plurality of transcoding devices and predicted load values of the plurality of transcoding devices, wherein a predicted load value of a transcoding device is determined according to a current load value of the transcoding device and a load value of the to-be-assigned transcoding task, and the load value of the to-be-assigned task is determined according to the target requirement information of the to-be-assigned transcoding task.

23. The scheduling device according to any one of claims 16 to 22, wherein:

the task assignment request includes the target requirement information of the to-be-assigned task and an identifier of the to-be-assigned task, and the target requirement information of the to-be-assigned task includes the target resolution of the to-be-assigned task and the target frame rate of the to-be-assigned task, and the load information of each transcoding device further includes identifiers of transcoding tasks carried by the transcoding device; and
before determining the current load value of the first transcoding device, the processing unit is further configured to:
determine, among transcoding tasks carried by the plurality of transcoding devices, that there exists no transcoding task that is consistent with the target resolution of the to-be-assigned task, the target frame rate of the to-be-assigned task, and the identifier of the to-be-assigned task.

24. A transcoding device, comprising:

a receiving unit that is configured to receive a status request sent by a scheduling device;
a processing unit that is configured to determine a current load value according to load information of the transcoding device and device performance of the transcoding device, wherein the load information includes target requirement information of at least one transcoding task carried by the transcoding device, and target requirement information of a transcoding task includes a target resolution of the transcoding task and a target frame rate of the transcoding task, and generate a response message for the status request according to the current load value;
a transmitting unit that is configured to transmit the response message to the scheduling device, to allow the scheduling device to determine a target transcoding device according to the response message, wherein the target transcoding device is configured to perform a to-be-assigned transcoding task.

25. The transcoding device according to claim 24, wherein the processing unit is further configured to:

determine a preset maximum number of tasks corresponding to each piece of target requirement information of each carried transcoding task according to the device performance; and
determine the current load value of the transcoding device according to the preset maximum number of tasks corresponding to each piece of target requirement information and the number of transcoding tasks corresponding to each piece of target requirement information.

**26.** The transcoding device according to claim 25, wherein the current load value is determined by:

$$A = f_1 \times \frac{1}{X_1} + f_2 \times \frac{1}{X_2} + \cdots + f_n \times \frac{1}{X_n}$$

wherein A is the current load value of the transcoding device, $f_i$ is the number of tasks corresponding to the i-th target requirement information in the transcoding device, $X_i$ is the preset maximum number of tasks corresponding to the i-th target requirement information in the transcoding device, i = 1, 2, ... , n, n is the number of target requirement information of transcoding tasks carried by the transcoding device, and n is an integer greater than or equal to 1.

**27.** The transcoding device according to claim 24, wherein the load information further includes usages of a plurality of execution cores, and the processing unit is further configured to:

determine an average CPU usage according to the usages of the plurality of execution cores; and
generate the response message for the status request according to the current load value and the determined average CPU usage.

**28.** The transcoding device according to claim 27, wherein the processing unit is further configured to:

rank the plurality of execution cores according to a usage of each execution core in a desending order; and
determine an average value of usages of top N execution cores as the average CPU usage, wherein N is an integer greater than or equal to 1.

**29.** The transcoding device according to claim 24, wherein the status request includes target requirement information of a to-be-assigned task, and the target requirement information of the to-be-assigned task includes a target resolution and a target frame rate of the to-be-assigned task, and the processing unit is further configured to:

determine a load value of the to-be-assigned task according to the target requirement information of the to-be-assigned task;
determine a predicted load value of the transcoding device according to the current load value of the transcoding device and the load value of the to-be-assigned task; and
generate the response message for the status request according to the current load value and the predicted load value of the transcoding device.

**30.** The transcoding device according to any one of claims 24 to 29, wherein:

the status request includes the target requirement information of the to-be-assigned task and an identifier of the to-be-assigned task, and the target requirement information of the to-be-assigned task includes the target resolution of the to-be-assigned task and the target frame rate of the to-be-assigned task; and
before determining the current load value, the processing unit is further configured to:
determine, among transcoding tasks carried by the transcoding device, that there exists no transcoding task that is consistent with the target resolution of the to-be-assigned task, the target frame rate of the to-be-assigned task, and the identifier of the to-be-assigned task.

**FIG. 1**

Multiple Transcoding Device

| Client Device | | Scheduling Device | | Transcoding Device 1 | Transcoding Device 2 | ...... |

201
Send to-be-assigned task

201
Sent load information

201
Send load information

201
Send load information

202
Determine current load value of each transcoding device according to target requirement information of at least one transcoding task of each transcoding device and device performance of each transcoding device

203
According to current load values of plurality of transcoding devices, determine, from plurality of transcoding devices, target transcoding device whose current load value is less than first threshold

203
Send response message for task assignment request

**FIG. 2**

29

Scheduling Device        Transcoding Device

301

Send status request →

302

Determine current load value according to own load information and device performance of transcoding device

303

Generate response message for status request according to current load value

304

← Send response message

305

Determine target transcoding device according to response message, where target transcoding device is used to execute to-be-assigned transcoding task

**FIG. 3**

400

## Scheduling Device

401

### Receiving Unit

402

### Processing Unit

403

### Transmitting Unit

**FIG. 4**

500

## Transcoding Device

501

### Receiving Unit

502

### Processing Unit

503

### Transmitting Unit

**FIG. 5**

## INTERNATIONAL SEARCH REPORT

| International application No. |
| --- |
| **PCT/CN2018/107476** |

**A. CLASSIFICATION OF SUBJECT MATTER**

H04N 19/40(2014.01)i

According to International Patent Classification (IPC) or to both national classification and IPC

**B. FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNKI, CNABS, CNTXT, VEN, USTXT: 转码, 性能, 负载, 分辨率, 清晰度, 码率, 阈值, 任务, transcode, performance, load, definition, resolution, frame rate, threshold, task, mission

**C. DOCUMENTS CONSIDERED TO BE RELEVANT**

| Category* | Citation of document, with indication, where appropriate, of the relevant passages | Relevant to claim No. |
| --- | --- | --- |
| X | CN 105992020 A (LETV CLOUD COMPUTING CO., LTD.) 05 October 2016 (2016-10-05) description, paragraphs 0028-0222, and figures 1-7 | 1-30 |
| X | CN 107295110 A (WANGSU SCIENCE AND TECHNOLOGY CO., LTD.) 24 October 2017 (2017-10-24) description, paragraphs 0019-0087, and figures 1-5 | 1-30 |
| X | CN 105162809 A (BEIJING INSTITUTE OF TECHNOLOGY) 16 December 2015 (2015-12-16) description, paragraphs 0026-0054, and figures 1-2 | 1-30 |
| X | CN 104717517 A (BEIJING QIYI CENTURY SCIENCE & TECHNOLOGY CO., LTD.) 17 June 2015 (2015-06-17) description, paragraphs 0052-0119, and figures 1-3 | 1-30 |
| X | US 2014267571 A1 (BLUE JEANS NETWORK) 18 September 2014 (2014-09-18) description, paragraphs 0032-0142, and figures 1-9 | 1-30 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **26 March 2019** | **04 April 2019** |

| Name and mailing address of the ISA/CN | Authorized officer |
| --- | --- |
| **State Intellectual Property Office of the P. R. China** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

| INTERNATIONAL SEARCH REPORT Information on patent family members | | | | International application No. PCT/CN2018/107476 | | | |
|---|---|---|---|---|---|---|---|
| Patent document cited in search report | | | Publication date (day/month/year) | Patent family member(s) | | | Publication date (day/month/year) |
| CN | 105992020 | A | 05 October 2016 | WO | 2017016292 | A1 | 02 February 2017 |
| | | | | US | 2017026311 | A1 | 26 January 2017 |
| CN | 107295110 | A | 24 October 2017 | None | | | |
| CN | 105162809 | A | 16 December 2015 | None | | | |
| CN | 104717517 | A | 17 June 2015 | CN | 104717517 | B | 13 April 2018 |
| US | 2014267571 | A1 | 18 September 2014 | US | 9154735 | B2 | 06 October 2015 |
| | | | | US | 2016105641 | A1 | 14 April 2016 |
| | | | | US | 9525849 | B2 | 20 December 2016 |

Form PCT/ISA/210 (patent family annex) (January 2015)